# EUROPEAN PATENT APPLICATION

(11) **EP 4 443 634 A1**
(43) Date of publication of application: **09.10.2024**
(21) Application number: 22922820.0
(22) Date of filing: 28.01.2022
(51) Int. Cl.: H01M 50/507

(54) **CONNECTION ASSEMBLY, BATTERY CELL, BATTERY, AND ELECTRIC DEVICE**

(71) Applicant: Contemporary Amperex Technology (Hong Kong) Limited, Central, Central And Western District (HK)
(72) Inventor: CHEN, Wenwei, Ningde, Fujian 352100 (CN); KE, Haibo, Ningde, Fujian 352100 (CN); ZHANG, Xiaoping, Ningde, Fujian 352100 (CN); LI, Quankun, Ningde, Fujian 352100 (CN); YANG, Kaihuan, Ningde, Fujian 352100 (CN)
(74) Representative: Behr, Wolfgang
(86) International application number: PCT/CN2022/074769
(87) International publication number: WO 2023/141980

(57) **Abstract**

Embodiments of the present application provide a connecting assembly, a battery cell, a battery, and a power consumption device. The connecting assembly is used for a battery cell. The connecting assembly includes: a connector, including a first connecting portion for connecting a tab of an electrode assembly, a second connecting portion for connecting an electrode terminal, and a third connecting portion for connecting the first connecting portion and the second connecting portion, where a fusing portion is formed between the first connecting portion and the third connecting portion, and the third connecting portion has a first surface facing the electrode assembly; a first insulator wrapping the fusing portion; and a second insulator covering at least a portion of the first surface, where the second insulator and the first insulator are integrally formed. The connecting assembly can improve safety of the battery cell.

## Description

### Technical Field

The present application relates to the field of battery technology, and particularly to a connecting assembly, a battery cell, a battery, and a power consumption device.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

In the development of the battery technology, in addition to improving performance of batteries, safety is also a non-negligible issue. Therefore, how to improve the safety of batteries is an urgent technical problem to be solved in the battery technology.

### Summary

The present application aims to provide a connecting assembly, a battery cell, a battery, and a power consumption device. The connecting assembly can improve safety of the battery cell.

The present application is implemented through the following technical solutions:

In a first aspect, the present application provides a connecting assembly for a battery cell, including: a connector, including a first connecting portion for connecting a tab of an electrode assembly, a second connecting portion for connecting an electrode terminal, and a third connecting portion for connecting the first connecting portion and the second connecting portion, where a fusing portion is formed between the first connecting portion and the third connecting portion, the first connecting portion, the fusing portion and the third connecting portion are arranged in a first direction, and the third connecting portion has a first surface facing the electrode assembly; a first insulator wrapping the fusing portion; and a second insulator covering at least a portion of the first surface, where the second insulator and the first insulator are integrally formed.

According to the connecting assembly in the embodiment of the present application, the first insulator and the second insulator are integrally formed, and the first insulator wraps the fusing portion, that is, the circumference of the fusing portion is wrapped by the first insulator, so the first insulator and the second insulator are firmly connected with the connector. In a battery cell including the connecting assembly, when current flowing through the connector exceeds a threshold, the fusing portion is fused, the electrical connection between the first connecting portion and the third connecting portion is broken, and the first insulator is at least partially fused or deformed due to a high temperature generated during the fusing of the fusing portion to block the connection between the first connecting portion and the third connecting portion, and wraps a disconnection point of the first connecting portion and a disconnection point of the third connecting portion to limit relative positions of the first connecting portion and the third connecting portion and reduce the risk of entry of an electrolyte into a fusing gap, so that the first connecting portion and the third connecting portion are in an insulated isolation state. Meanwhile, because the first insulator and the second insulator are integrally formed, the first insulator and the second insulator are still connected to the third connecting portion, which improves insulation reliability and improve safety of the battery cell.

According to some embodiments of the present application, the first insulator surrounds an outer circumference of the fusing portion.

In the foregoing solution, the first insulator surrounds the fusing portion, that is, the first insulator is a circular structure, and the fusing portion is disposed inside the circular structure to achieve overall wrapping of the outer circumference of the fusing portion and ensure the insulating effect of the fusing portion. Even if the fusing portion is fused and the first insulator is fused or deformed, the first connecting portion and the third connecting portion can be separated.

According to some embodiments of the present application, the connector has a gap, the gap is located on at least one side of the fusing portion in a second direction, an inner wall of the first insulator is provided with a first convex portion corresponding to the gap, the first convex portion is configured to fill the gap, and the second direction is perpendicular to the first direction and a thickness direction of the connector.

In the foregoing solution, the gap is a component of the fusing portion, and the gap formed on the connector reduces overcurrent area here to protect safety. The first convex portion fills the gap, so that the first convex portion protrudes from the inner wall of the first insulator in the second direction. After the fusing portion is fused, the first convex portion is fused or deformed to isolate the first connecting portion and the third connecting portion, so as to achieve a good insulation effect.

According to some embodiments of the present application, the third connecting portion further has a second surface away from the electrode assembly and an outer circumferential surface connecting the first surface and the second surface, the second insulator comprises a bottom wall and a side wall, the side wall protrudes from an edge of the bottom wall in a direction away from the electrode assembly, the bottom wall covers at least a portion of the first surface, and the side wall covers at least a portion of the outer circumferential surface.

In the foregoing solution, the side wall wraps the outer circumferential surface of the third connecting portion to increase the connection area between the second insulator and the third connecting portion, ensure the stability of connection between the second insulator and the third connecting portion, and improve the insulating effect of the second insulator on the third connecting portion.

According to some embodiments of the present application, in the first direction, the outer circumferential surface includes a first sub outer circumferential surface and a second sub outer circumferential surface disposed oppositely, the fusing portion is connected to the first sub outer circumferential surface, and the side wall covers at least a portion of the second sub outer circumferential surface.

In the foregoing solution, in the first direction, the side wall covers at least the portion of the second sub outer circumferential surface, and the first insulator and the side wall that cooperates with the second sub outer circumferential surface form two limiting positions, so that the structure formed by the first insulator and the second insulator can form a stable connection with the third connecting portion to avoid position movement of the first insulator and the second insulator relative to the third connecting portion.

According to some embodiments of the present application, in the second direction, the outer circumferential surface includes a third sub outer circumferential surface and a fourth sub outer circumferential surface disposed oppositely, the side wall covers the third sub outer circumferential surface and the fourth sub outer circumferential surface, and the second direction is perpendicular to the first direction and the thickness direction of the connector.

In the foregoing solution, the side wall covers the third sub outer circumferential surface and the fourth sub outer circumferential surface, and in the second direction, the second insulator and the third connecting portion are fixed to each other to avoid position movement of the second insulator relative to the third connecting portion.

According to some embodiments of the present application, an end, away from the bottom wall, of the side wall does not exceed the second surface.

In the foregoing solution, the end, away from the bottom wall, of the side wall does not exceed the second surface, which reduces space occupation of the second insulator on the side, away from the electrode assembly, of the second surface.

According to some embodiments of the present application, an angle between the outer circumferential surface and the first surface is an acute angle.

In the foregoing solution, the angle between the outer circumferential surface and the first surface is an acute angle, the side wall covers the outer circumferential surface, which is equivalent to forming a bevel fit between the edge of the third connecting portion and the side wall, and the second insulator is buckled onto the outer circumferential surface, thereby improving the stability of connection between the second insulator and the third connecting portion.

According to some embodiments of the present application, the third connecting portion is provided with a concave portion, the second insulator is provided with a second convex portion, and the second convex portion is embedded with the concave portion.

In the foregoing solution, the convex portion is embedded with the concave portion to improve the reliability of connection between the third connecting portion and the second insulator and ensure that the third connecting portion is firmly connected to the second insulator. Even if the fusing portion is fused, the first insulator and the second insulator can be stably connected to the third connecting portion to ensure insulation from the first connecting portion and the tab.

According to some embodiments of the present application, the concave portion is a through hole penetrating the first surface and the second surface.

In the foregoing solution, the concave portion is the through hole, which facilitates machining and has low manufacturing cost.

According to some embodiments of the present application, the through hole includes a first hole segment, and a cross-sectional area of the first hole segment gradually increases from the first surface to the second surface.

In the foregoing solution, the cross-sectional area of the first hole segment refers to an area of the first hole segment cut by a surface parallel to the first surface. The cross-sectional area of the first hole segment gradually increases from the first surface to the second surface, so after the second convex portion is embedded with the through hole, the strength of connection between the second insulator and the third connecting portion in the thickness direction of the third connecting portion is further increased, and the stability of connection between the third connecting portion and the second insulator is ensured.

According to some embodiments of the present application, there are two first connecting portions, the two first connecting portions are spaced in the second direction, the second direction is perpendicular to the first direction and the thickness direction of the connector, there are two through holes, the two through holes are spaced in the second direction, the second connecting portion protrudes from the second surface, and the second connecting portion is located between the two through holes.

In the foregoing solution, the two through holes increase a connecting position between the third connecting portion and the second insulator and improve the stability of connection between the third connecting portion and the second insulator.

According to some embodiments of the present application, in the first direction, a minimum distance between a wall portion of the through hole and the fusing portion is greater than that between the second connecting portion and the fusing portion.

In the foregoing solution, the distance between the through hole and the fusing portion is greater than that between the second connecting portion and the fusing portion, so the position of the through hole hardly affects the transmission of the current between the second connecting portion and the first connecting portion, and the connecting portion has a high overcurrent capacity. If the through hole is close to the fusing portion, the transmission of the current between the second connecting portion and the first connecting portion is affected, resulting in a weak overcurrent capacity, excessive temperature rise, decomposition of an electrolyte, and short service life of the electrolyte. In addition, when the diameter of the through hole is large, the fusing portion may change, and the uncertain fusing portion affects normal use of the battery cell.

According to some embodiments of the present application, the concave portion is a groove formed on the outer circumferential surface, and the second convex portion is a protrusion formed on an inner circumferential surface of the side wall.

In the foregoing solution, the groove of the outer circumferential surface is embedded with the protrusion of the side wall, so that the second insulator is unlikely to separate from the third connecting portion, and a firm connection between the second insulator and the third connecting portion is ensured.

According to some embodiments of the present application, in the first direction, the outer circumferential surface comprises a first sub outer circumferential surface and a second sub outer circumferential surface disposed oppositely, the fusing portion is connected to the first sub outer circumferential surface, and the groove is formed on the second sub outer circumferential surface.

In the foregoing solution, the groove and the fusing portion are disposed at two ends of the third connecting portion in the first direction, that is, the first insulator and the protrusion form two limiting positions at the two ends of the third connecting portion, thereby limiting the structure formed by the first insulator and the second insulator to be fixed relative to the third connecting portion, and reducing a probability of separation of the structure formed by the first insulator and the second insulator from the third connecting portion.

According to some embodiments of the present application, the groove includes a first groove segment, and a cross-sectional area of the first groove segment gradually increases from an opening of the groove to a bottom of the groove.

In the foregoing solution, the second convex portion is embedded with the groove, so that the second convex portion fills the groove. When the cross-sectional area of the first groove segment gradually increases from the opening of the groove to the bottom of the groove, the structural form of the first groove segment can limit the second convex portion to separate from the groove from the bottom of the groove to the opening of the groove, thereby increasing the difficulty of separating the second insulator from the third connecting portion, and ensuring the stability of connection between the second insulator and the third connecting portion.

According to some embodiments of the present application, there is a plurality of grooves spaced in a circumferential direction of the third connecting portion.

In the foregoing solution, there is the plurality of grooves, so that the third connecting portion and the second insulator have a plurality of connecting positions, which improves the stability of connection between the third connecting portion and the second insulator.

In a second aspect, the present application provides a battery cell, including: a shell, including a wall portion; an electrode assembly, disposed inside the shell; an electrode terminal, disposed on the wall portion; and the connecting assembly described in any of the foregoing embodiments, where the first connecting portion is connected to a lug of the electrode assembly, and the second connecting portion is connected to the electrode terminal.

In a third aspect, the present application provides a battery, including the battery cell described in any of the foregoing embodiments.

In a fourth aspect, the present application provides a power consumption device, including the battery described in any of the foregoing embodiments.

In a fifth aspect, the present application provides a connecting assembly manufacturing method, the connecting assembly being used for a battery cell, including: providing a connector, where the connector includes a first connecting portion for connecting a tab of an electrode assembly, a second connecting portion for connecting an electrode terminal, and a third connecting portion for connecting the first connecting portion and the second connecting portion, a fusing portion is formed between the first connecting portion and the third connecting portion, and the third connecting portion has a first surface facing the electrode assembly; and forming a first insulator and a second insulator on the connector by integrated injection molding, so that the first insulator wraps the fusing portion, and the second insulator covers at least a portion of the first surface.

In a sixth aspect, the present application provides a battery cell manufacturing method, including: providing a shell, including a wall portion; providing an electrode assembly; providing an electrode terminal; providing a connecting assembly, where the connecting assembly includes: a connector, including a first connecting portion, a second connecting portion, and a third connecting portion for connecting the first connecting portion and the second connecting portion, where a fusing portion is formed between the first connecting portion and the third connecting portion, and the third connecting portion has a first surface; a first insulator wrapping the fusing portion; and a second insulator covering at least a portion of the first surface, where the second insulator and the first insulator are integrally formed; disposing the electrode terminal on the wall portion; placing the electrode assembly inside a shell body; connecting the first connecting portion to a tab of the electrode assembly, so that the first surface faces the electrode assembly; and connecting the second connecting portion to the electrode terminal.

In a seventh aspect, the present application provides a battery cell manufacturing device, including: a provision module, configured to: provide a shell, where the shell includes a wall portion; provide an electrode assembly; provide an electrode terminal; and provide a connecting assembly, where the connecting assembly includes: a connector, including a first connecting portion, a second connecting portion, and a third connecting portion for connecting the first connecting portion and the second connecting portion, where a fusing portion is formed between the first connecting portion and the third connecting portion, and the third connecting portion has a first surface; a first insulator wrapping the fusing portion; and a second insulator covering at least a portion of the first surface, where the second insulator and the first insulator are integrally formed; and a mounting module, configured to dispose the electrode terminal on the wall portion; place the electrode assembly inside a shell body; connect the first connecting portion to a tab of the electrode assembly, so that the first surface faces the electrode assembly; and connect the second connecting portion to the electrode terminal.

The above description is only a summary of the technical solutions of the present application. In order to understand the technical means in the present application more clearly, it can be implemented in accordance with the content of the specification; and in order to make the above and other objectives, features and characteristics of the present application more obvious and easier to understand, and the specific embodiments of the application are cited below.

### Brief Description of Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic structural diagram of a connecting assembly according to some embodiments of the present application;
FIG. 5 is a schematic diagram of an exploded structure of the connecting assembly according to some embodiments of the present application;
FIG. 6 is a bottom view of the connecting assembly according to some embodiments of the present application;
FIG. 7 is a cross-sectional view of the connecting assembly according to some embodiments of the present application;
FIG. 8 is a partially enlarged view at A in FIG. 7;
FIG. 9 is a schematic structural diagram of a connecting assembly according to other embodiments of the present application;
FIG. 10 is a schematic diagram of an exploded structure of the connecting assembly according to other embodiments of the present application;
FIG. 11 is a cross-sectional view of the connecting assembly according to other embodiments of the present application;
FIG. 12 is a partially enlarged view at B in FIG. 11;
FIG. 13 is a schematic structural diagram of the connecting assembly according to other embodiments of the present application;
FIG. 14 is a schematic diagram of an exploded structure of the connecting assembly according to other embodiments of the present application;
FIG. 15 is a schematic flowchart of a connecting assembly manufacturing method according to some embodiments of the present application;
FIG. 16 is a schematic flowchart of a battery cell manufacturing method according to some embodiments of the present application; and
FIG. 17 is a schematic block diagram of a battery cell manufacturing device according to some embodiments of the present application.

The drawings are not drawn to actual scale.

Reference signs: 100 - battery; 10 - battery cell; 11 - shell; 111 - wall portion; 112 - shell body; 12 - electrode assembly; 13 - electrode terminal; 14 - connecting assembly; 141 - connector; 1411 - first connecting portion; 1412 - second connecting portion; 1413 - third connecting portion; 1414 - fusing portion; 1415 - first surface; 1416 - second surface; 1417 - outer circumferential surface; 1417a - first sub outer circumferential surface; 1417b - second sub outer circumferential surface; 1417c - third sub outer circumferential surface; 1417d - fourth sub outer circumferential surface; 1418 - concave portion; 14181 - first hole segment; 14182 - second hole segment; 1419 - gap; 142 - first insulator; 1421 - first convex portion; 143 - second insulator; 1431 - bottom wall; 1432 - side wall; 1433 - second convex portion; 20 - box body; 21 - first portion; 22 - second portion; 200 - controller; 300 - motor; 1000 - vehicle.

### Detailed Description of Embodiments

Implementations of the present application will be further described below in detail with reference to the drawings and embodiments. The detailed description of the following embodiments and the drawings are used to exemplarily illustrate principles of the present application, but cannot be used to limit the scope of the present application, that is, the present application is not limited to the described embodiments.

Unless otherwise defined, all technological and scientific terms used herein have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and claims of the present application as well as the brief description of the drawings described above are intended to cover non-exclusive inclusion.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

It should be noted that similar reference signs and letters in the following drawings represent similar terms, so once a term is defined in a drawing, further discussion on this term is not required in the follow-up drawings.

In the description of the present application, it should be understood that the orientations or positional relationships indicated by the terms "center", "length", "width", "thickness", "bottom", "inner", "outer", "circumferential", and the like are based on the orientations or positional relationships shown in the accompanying drawings, are merely intended to facilitate the description of the present application and simplify the description only, but not to indicate or imply that the device or element referred to must have a particular orientation or be constructed and operated in a particular orientation, and therefore, cannot be interpreted as limiting the present application. In addition, the terms "first", "second", and the like in the specification and claims of the present application or the foregoing drawings are used to distinguish different objects, rather than to describe a specific order, and may explicitly or implicitly include one or more of these features. In the description of the present application, unless otherwise specified, "plurality" means two or more.

In the description of the present application, it should be noted that, unless otherwise specified and defined, the terms "mounted", "connected", and "connection" should be generally understood, for example, the "connection" may be a fixed connection, a detachable connection, an integral connection, a mechanical connection, an electrical connection, a direct connection, or a connection through a medium, or a communication of interiors of two elements. Those of ordinary skill in the art may understand the specific meanings of the above terms in the present application according to specific circumstances.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to the way of packaging: cylindrical battery cells, square battery cells, and soft package battery cells, which are not limited in the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery generally includes a box body for packaging one or more battery cells. The box body may prevent liquid or other foreign matters from affecting the charging or discharging of the battery cells.

The battery cell includes an electrode assembly and an electrolyte, where the electrode assembly is composed of a positive electrode sheet, a negative electrode sheet, and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like.

The battery cell further includes a connector, which is used for electrically connecting the tab of the electrode assembly with the electrode terminal.

The development of battery technology needs to consider many design factors simultaneously, such as energy density, discharge capacity, charge and discharge rate, and other performance parameters. In addition, the safety of the battery should also be considered.

In order to ensure the safety of the battery cell, the connector usually includes a fusing portion. When an external circuit is shorted, current flowing through the connector increases, so that the fusing portion is fused to disconnect the circuit. On the one hand, in order to ensure that the fused circuit remains open and avoid re-overlapping of the fused position, the existing fusing portion is designed with an insulator to maintain the distance between two sides of the fusing portion. However, when there is residual electrolyte in a fusing gap, the circuit will still be reconnected. On the other hand, in order to prevent the tab from being misaligned or too wide to cross the fusing portion, an electrical connection is established between the two sides of the fusing portion, and an insulating adhesive is further applied to the connector and/or the tab. However, the strength of the insulating adhesive soaked in the electrolyte will decrease, and the insulating adhesive may fall off or the like, so that the two fused sides are electrically connected again through the tab to cause safety risks such as fire and explosion.

In view of this, in order to solve the safety risks such as fire and explosion caused by the reconnection of the circuit after the fusing portion is fused, the inventor has designed a connecting assembly for a battery cell after in-depth research. The connecting assembly includes a connector, a first insulator, and a second insulator. The connector includes a first connecting portion for connecting a tab of an electrode assembly, a second connecting portion for connecting an electrode terminal, and a third connecting portion for connecting the first connecting portion and the second connecting portion. A fusing portion is formed between the first connecting portion and the third connecting portion, and the third connecting portion has a first surface facing the electrode assembly. The first insulator wraps the fusing portion, and the second insulator covers at least a portion of the first surface. The first insulator and the second insulator are integrally formed. The first insulator wraps the fusing portion, the first insulator and the second insulator are integrally formed, and after the fusing portion is fused, the first insulator is fused, so that the first connecting portion and the third connecting portion are in an insulated state, and the second insulator insulates the third insulator to improve insulation reliability and safety of a battery cell.

In the battery cell using the foregoing connecting assembly, when an external circuit is shorted, current flowing through an adapter increases, the fusing portion is fused, the electrical connection between the first connecting portion and the third connecting portion is broken, and the first insulator is at least partially fused or deformed due to a high temperature generated during fusing to block the connection between the first connecting portion and the third connecting portion, and wraps a disconnection point of the first connecting portion and a disconnection point of the third connecting portion to limit relative positions of the first connecting portion and the third connecting portion and reduce the risk of entry of an electrolyte into a fusing gap, so that the first connecting portion and the third connecting portion are in an insulated isolation state. Meanwhile, because the first insulator and the second insulator are integrally formed, the first insulator and the second insulator are still connected to the third connecting portion, and the second insulator covers at least a portion of the first surface to improve the insulation reliability and improve the safety of the battery cell.

The battery cell disclosed in the embodiments of the present application may be used, but is not limited to, in a power consumption device such as a vehicle, a ship or an aircraft. A power supply system of the power consumption device may be composed of battery cells disclosed in the present application.

An embodiment of the present application provides a power consumption device using a battery as a power supply. The power consumption device may be, but is not limited to, a mobile phone, a tablet computer, a laptop computer, an electric toy, an electric tool, an electric bicycle, an electric motorcycle, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

For convenient description, the following embodiments are described by an example of a vehicle as a power consumption device in an embodiment of the present application.

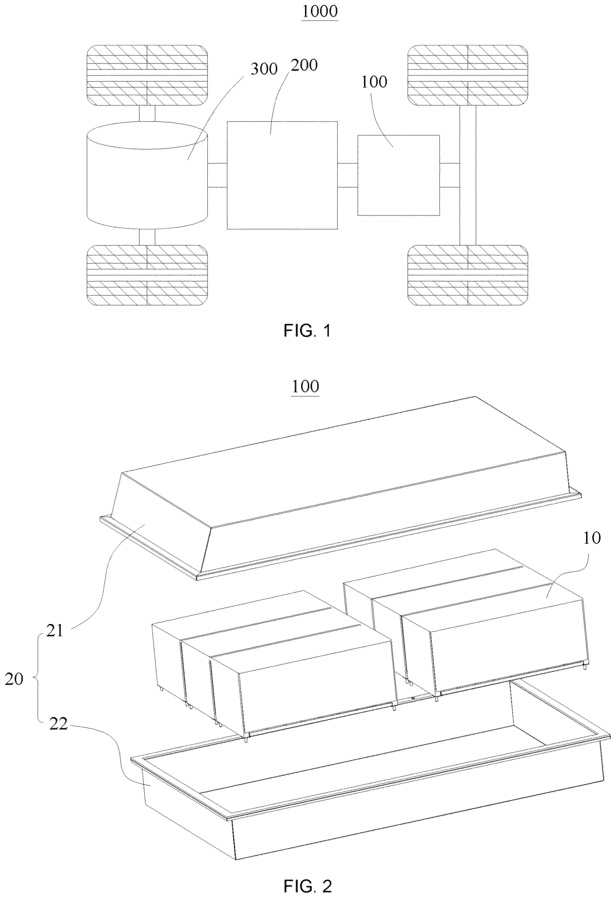

Referring to FIG. 1, FIG. 1 shows a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000 and is used for a circuit system of the vehicle 1000, for example, for a working power demand of the vehicle 1000 during startup, navigation and running.

The vehicle 1000 may further include a controller 200 and a motor 300. The controller 200 is used for controlling the battery 100 to supply power to the motor 300, for example, for the working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 shows a schematic diagram of an exploded structure of the battery 100 according to some embodiments of the present application. The battery 100 includes a battery cell 10 and a box body 20, where the battery cell 10 is accommodated inside the box body 20. The box body 20 is used for providing an accommodating space for the battery cell 10, and the box body 20 may have various structures. In some embodiments, the box body 20 may include a first portion 21 and a second portion 22, the first portion 21 and the second portion 22 cover each other, and the first portion 21 and the second portion 22 jointly confine the accommodating space for accommodating the battery cell 10. The second portion 22 may be of a hollow structure with an opening at one end, the first portion 21 may be of a plate-like structure, and the first portion 21 covers an opening side of the second portion 22, so that the first portion 21 and the second portion 22 jointly confine the accommodating space. Alternatively, both the first portion 21 and the second portion 22 may be of a hollow structure with an opening on one side, and the opening side of the first portion 21 covers the opening side of the second portion 22. Of course, the box body 20 formed by the first portion 21 and the second portion 22 may be in various shapes, such as cylindrical or cuboid.

In the battery 100, there may be a plurality of battery cells 10. The plurality of battery cells 10 may be connected in series, parallel, or series and parallel. The series and parallel connection refers to both series and parallel connection in the plurality of battery cells 10. The plurality of battery cells 10 may be directly connected in series, parallel, or series and parallel together, and then the whole composed of the plurality of battery cells 10 is accommodated in the box body 20. Alternatively, the plurality of battery cells 10 may be first connected in series, parallel, or series and parallel to form a battery module in the battery 100, and then a plurality of battery modules may be connected in series, parallel, or series and parallel to form a whole accommodated in the box body 20. The battery 100 may further include other structures. For example, the battery 100 may further include a busbar component for implementing an electrical connection between the plurality of battery cells 10.

Each battery cell 10 may be a secondary battery, a primary battery, a lithium-sulfur battery, a sodium-ion battery, or a magnesium-ion battery, but is not limited thereto.

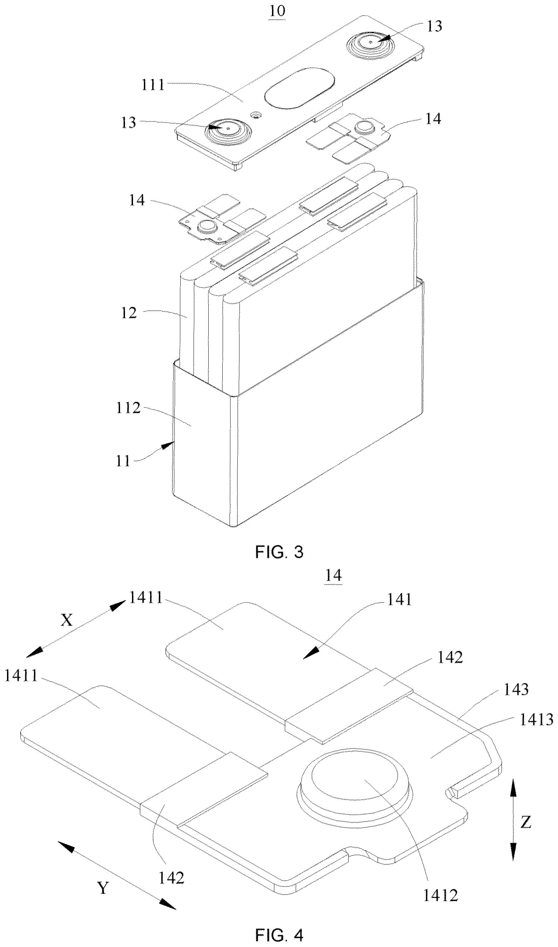

Referring to FIG. 3, FIG. 3 shows a schematic diagram of an exploded structure of the battery cell 10 according to some embodiments of the present application. The battery cell 10 refers to a minimum unit that forms the battery 100. As shown in FIG. 3, the battery cell 10 includes a shell 11, an electrode assembly 12, an electrode terminal 13, and a connecting assembly 14. The shell 11 includes a wall portion 111, the electrode assembly 12 is disposed inside the shell 11, the electrode terminal 13 is disposed on the wall portion 111, and the connecting assembly 14 connects a tab of the electrode assembly 12 and the electrode terminal 13.

The shell 11 is a component used for forming an internal environment of the battery cell 100, and the formed internal environment may be used for accommodating the electrode assembly 1212, a medium (such as electrolyte) and other components. The shell 11 includes the wall portion 111, and the wall portion 111 is used for disposing the electrode terminal 13 to output or input electrical energy.

The shell 11 may include a shell body 112 and an end cover. The shell body 112 and the end cover may be independent components. Alternatively, the shell body 112 is provided with an opening, and the end cover covers the opening to form the internal environment of the battery cell 100. Unlimitedly, the end cover and the shell body 112 may be integrated. Specifically, the end cover and the shell body 112 may form a common connection surface before other components are put in the shell. When the interior of the shell body 112 is required to be encapsulated, the end cover is closed to the shell body 112. The shell body 112 may be cuboid. Specifically, a shape of the shell body 112 may be determined according to a specific shape and size of the electrode assembly 1212. A material of the shell body 112 may be various, such as copper, iron, aluminum, stainless steel, aluminum alloy, or plastic, and is not specially limited in the embodiments of the present application. The shell body 112 mentioned in the embodiments of the present application is square.

The end cover refers to a component that is closed to the opening of the shell body 112 to isolate the internal environment of the battery cell 10 from an external environment. Unlimitedly, a shape of the end cover may adapt to that of the shell body 112 to fit the shell body 112. Optionally, the end cover may be made of a material with certain hardness and strength (such as aluminum alloy). In this case, the end cover is less prone to deformation during extrusion and collision, so that the battery cell 10 can have higher structural strength and its safety performance can be improved. A pressure relief portion may be disposed on the end cover to release internal pressure when the internal pressure or temperature of the battery cell 10 reaches a threshold. The material of the end cover may also be various, such as copper, iron, aluminum, stainless steel, aluminum alloy, or plastic, and is not specially limited in the embodiments of the present application. In some embodiments, a third insulator may be further disposed on an inner side of the end cover, and the third insulator may be used for isolating electrical connection components inside the shell body 112 from the end cover to reduce the risk of a short circuit. For example, the third insulator may be plastic, rubber, or the like.

Optionally, the end cover is the wall portion 111, and the electrode terminal 13 is disposed on the wall portion 111, that is, the electrode terminal 13 is disposed on the end cover.

The electrode assembly 12 is a component that undergoes electrochemical reactions in the battery cell 10. The shell body 112 may include one or more electrode assemblies 12. The electrode assembly 12 is mainly formed by coiling a positive electrode sheet and a negative electrode sheet, a separator is usually disposed between the positive electrode sheet and the negative electrode sheet, and the separator is used for insulating and isolating the positive electrode sheet and the negative electrode sheet. Portions of the positive electrode sheet and the negative electrode sheet with active materials form a main body of the electrode assembly 12, while portions of the positive electrode sheet and the negative electrode sheet without active materials form respective tabs. The positive tab and the negative tab may be located at one end of the main body together or at two ends of the main body separately. In charging and discharging processes of the battery 100, the positive electrode active material and the negative electrode active material react with an electrolyte, and the tabs are connected to the electrode terminals 13 to form a current circuit.

The electrode terminal 13 may be disposed on the end cover for outputting or inputting the electrical energy of the battery cell 10.

The connecting assembly 14 is a component for electrically connecting the electrode assembly 12 with the electrode terminal 13. The electrode assembly 12 and the electrode terminal 13 are connected through the connecting assembly 14. The connecting assembly 14 includes a first connecting portion connected to the electrode assembly 12 and a second connecting portion connected to the electrode terminal 13.

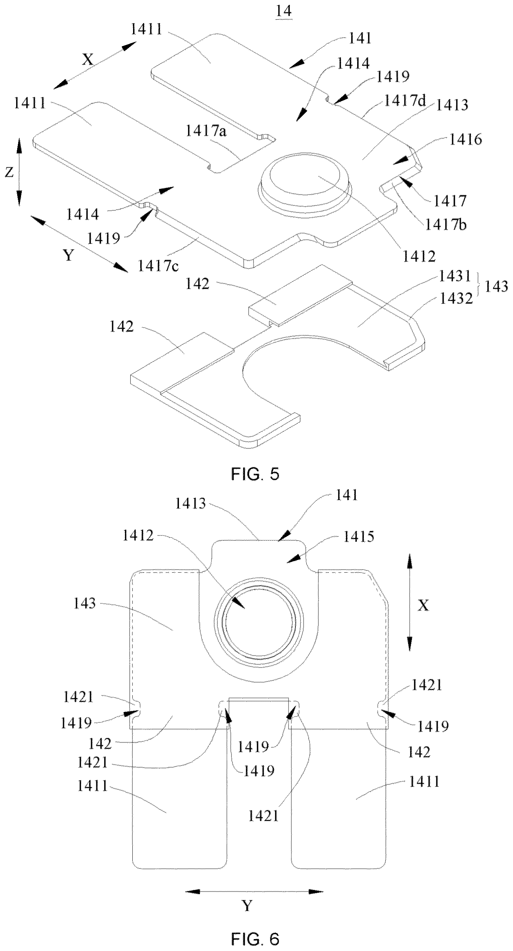

Referring to FIG. 4 to FIG. 6, FIG. 4 is a schematic structural diagram of the connecting assembly 14 according to some embodiments of the present application, FIG. 5 is a schematic diagram of an exploded structure of the connecting assembly 14 according to some embodiments of the present application, FIG. 6 is a bottom view of the connecting assembly 14 according to some embodiments of the present application, and FIG. 6 is a schematic diagram of the connecting assembly 14 in a direction from a first surface 1415 to a second surface 1416.

According to some embodiments of the present application, as shown in FIG. 4 to FIG. 6, the present application provides a connecting assembly 14 for a battery cell 10. The connecting assembly 14 includes a connector 141, a first insulator 142, and a second insulator 143. The connector 141 includes a first connecting portion 1411 for connecting a tab of an electrode assembly 12 (see FIG. 3), a second connecting portion 1412 for connecting an electrode terminal 13, and a third connecting portion 1413 for connecting the first connecting portion 1411 and the second connecting portion 1412, where a fusing portion 1414 is formed between the first connecting portion 1411 and the third connecting portion 1413; the first connecting portion 1411, the fusing portion 1414, and the third connecting portion 1413 are arranged in a first direction X, and the third connecting portion 1413 has a first surface 1415 facing the electrode assembly 12; the first insulator 142 wraps the fusing portion 1414; the second insulator 143 covers at least a portion of the first surface 1415; and the second insulator 143 and the first insulator 142 are integrally formed.

The connector 141 is a component for electrically connecting the electrode assembly 12 with the electrode terminal 13, and the connector 141 is a conductive component, for example, the connector 141 may be a metal (such as copper or aluminum) component with good conductivity.

The first connecting portion 1411 is a portion of the connector 141 for connecting with the electrode assembly 12, and the connector 141 is connected with the electrode assembly 12 through the first connecting portion 1411.

The second connecting portion 1412 is a portion of the connector 141 for connecting with the electrode terminal 13, and the connector 141 is connected with the electrode terminal 13 through the second connecting portion 1412.

The fusing portion 1414 is a portion of the connector 141 that is formed between the first connecting portion 1411 and the third connecting portion 1413 and used for fusing when current exceeds a threshold to protect a battery cell 10.

The first connecting portion 1411, the second connecting portion 1412, the third connecting portion 1413, and the fusing portion 1414 of the connector 141 may all be located on the same plane, so that the overall connector 141 is flat. The second connecting portion 1412 of the connector 141 may alternatively protrude from other portions of the connector 141, and the second connecting portion 1412 may be circular, square, cylindrical, frustum-shaped, or in other shapes that meet connection requirements.

In the figures, the direction indicated by the letter X is a first direction, and the first direction X may be a length direction of the connector 141. The first connecting portion 1411 may extend in the first direction X.

The first insulator 142 and the second insulator 143 are both electrical insulating components to reduce a short circuit risk. For example, materials of the first insulator 142 and the second insulator 143 may be rubber, plastic, or the like.

The first insulator 142 wraps the fusing portion 1414, indicating that the first insulator 142 surrounds the fusing portion 1414, that is, the circumference of the fusing portion 1414 is wrapped by the first insulator 142.

The second insulator 143 covers at least a portion of the first surface 1415, indicating that the second insulator 143 may cover a portion of the first surface 1415, or the second insulator 143 may cover the entire first surface 1415. The first surface 1415 is the surface, facing the electrode assembly 12, of the third connecting portion 1413. Because the first connector 141 is a metal component, the second insulator 143 covers at least a portion of the first surface 1415 to insulate the connector 141 from the electrode assembly 12.

The first insulator 142 and the second insulator 143 are integrally formed, and the first insulator 142 and the second insulator 143 serve as a whole. For example, the first insulator 142 and the second insulator 143 are formed by hot melting (injection molding).

According to the connecting assembly 14 in the embodiment of the present application, the first insulator 142 and the second insulator 143 are integrally formed, and the first insulator 142 wraps the fusing portion 1414, that is, the circumference of the fusing portion 1414 is wrapped by the first insulator 142, so the first insulator 142 and the second insulator 143 are firmly connected with the connector 141. In a battery cell 10 including the connecting assembly 14, when current flowing through the connector 141 exceeds a threshold, the fusing portion 1414 is fused, the electrical connection between the first connecting portion 1411 and the third connecting portion 1413 is broken, and the first insulator 142 is at least partially fused or deformed due to a high temperature generated during the fusing of the fusing portion 1414 to block the connection between the first connecting portion 1411 and the third connecting portion 1413, and wraps a disconnection point of the first connecting portion 1411 and a disconnection point of the third connecting portion 1413 to limit relative positions of the first connecting portion 1411 and the third connecting portion 1413 and reduce the risk of entry of an electrolyte into a fusing gap, so that the first connecting portion 1411 and the third connecting portion 1413 are in an insulated isolation state. Meanwhile, because the first insulator 142 and the second insulator 143 are integrally formed, the first insulator 142 and the second insulator 143 are still connected to the third connecting portion 1413, which improves insulation reliability and improve safety of the battery cell 10.

According to some embodiments of the present application, optionally, the first insulator 142 surrounds an outer circumference of the fusing portion 1414.

The first insulator 142 surrounds the fusing portion 1414, that is, the first insulator 142 is a circular structure, and the fusing portion 1414 is disposed inside the circular structure to achieve overall wrapping of the outer circumference of the fusing portion 1414 and ensure the insulating effect of the fusing portion 1414. Even if the fusing portion 1414 is fused and the first insulator 142 is fused or deformed, the first connecting portion 1411 and the third connecting portion 1413 can be separated.

According to some embodiments of the present application, as shown in FIG. 4 to FIG. 6, the connector 141 has a gap 1419, the gap 1419 is located on at least one side of the fusing portion 1414 in a second direction Y, an inner wall of the first insulator 142 is provided with a first convex portion 1421 corresponding to the gap 1419, the first convex portion 1421 is configured to fill the gap 1419, and the second direction Y is perpendicular to the first direction X and a thickness direction Z of the connector 141.

In the figures, the direction indicated by the letter Y is the second direction, the direction indicated by the letter Z is the thickness direction Z of the connector 141, the second direction Y is perpendicular to the first direction X and the thickness direction Z of the connector 141, and the second direction Y may be a width direction of the connector 141.

The gap 1419 is located on at least one side of the fusing portion 1414 in a second direction Y, indicating that the gap 1419 may be located on one side of the fusing portion 1414 in the second direction Y, or the gap 1419 may be located on two sides of the fusing portion 1414 in the second direction Y. Optionally, the gap 1419 is located on two sides of the fusing portion 1414 in the second direction Y.

The first convex portion 1421 is configured to fill the gap 1419, and the first insulator 142 and the connecting portion 141 may be assembled by injection molding. For example, a molten insulating material is disposed on the connector 141, and the insulating material solidifies to form the first insulator 142 wrapping the fusing portion 1414 and the second insulator 143 wrapping the third connecting portion 1413.

The gap 1419 is a component of the fusing portion 1414, and the gap 1419 formed on the connector 141 reduces overcurrent area here to protect safety. The first convex portion 1421 fills the gap 1419, so that the first convex portion 1421 protrudes from the inner wall of the first insulator 142 in the second direction Y. After the fusing portion 1414 is fused, the first convex portion 1421 is fused or deformed to isolate the first connecting portion 1411 and the third connecting portion 1413, so as to achieve a good insulation effect.

According to some embodiments of the present application, optionally, as shown in FIG. 4 to FIG. 6, the third connecting portion 1413 further has a second surface 1416 away from the electrode assembly 12 and an outer circumferential surface 1417 connecting the first surface 1415 and the second surface 1416, the second insulator 143 includes a bottom wall 1431 and a side wall 1432, the side wall 1432 protrudes from an edge of the bottom wall 1431 in a direction away from the electrode assembly 12, the bottom wall 1431 covers at least a portion of the first surface 1415, and the side wall 1432 covers at least a portion of the outer circumferential surface 1417.

The second surface 1416 and the first surface 1415 are two opposite surfaces in a thickness direction of the third connecting portion 1413, that is, two opposite surfaces in the thickness direction Z of the connector 141.

The outer circumferential surface 1417 refers to a surface of the third connecting portion 1413 for connecting the first surface 1415 and the second surface 1416, that is, the outer circumferential surface 1417 is a surface disposed around an edge of the third connecting portion 1413.

The bottom wall 1431 is a wall, corresponding to the first surface 1415, of the second insulator 143, and the side wall 1432 is a wall, disposed around the edge of the bottom wall 1431, of the second insulator 143.

The bottom wall 1431 covers at least a portion of the first surface 1415, indicating that the bottom wall 1431 may cover a portion of the first surface 1415, or the bottom wall 1431 may cover the entire first surface 1415. Optionally, the bottom wall 1431 covers a portion of the first surface 1415 to avoid the intersection of the third connecting portion 1413 and the second connecting portion 1412. The side wall 1432 covers at least a portion of the outer circumferential surface 1417, indicating that the side wall 1432 may cover a portion of the outer circumferential surface 1417, or the side wall 1432 may cover the entire outer circumferential surface 1417.

In the battery cell 10, the third insulator is usually disposed on a side, facing the electrode assembly 12, of the end cover to insulate the connector 141 and the end cover, that is, the third insulator corresponds to the second surface 1416. The side wall 1432 protrudes from the edge of the bottom wall 1431 in the direction away from the electrode assembly 12, which can increase insulation on the outer circumferential surface 1417 of the third connecting portion 1413, so that the first surface 1415, outer circumferential surface 1417, and second surface 1416 of the third connecting portion 1413 are all insulated.

The side wall 1432 wraps the outer circumferential surface 1417 of the third connecting portion 1413 to increase the connection area between the second insulator 143 and the third connecting portion 1413, ensure the stability of connection between the second insulator 143 and the third connecting portion 1413, and improve the insulating effect of the second insulator 143 on the third connecting portion 1413.

According to some embodiments of the present application, optionally, as shown in FIG. 4 to FIG. 6, in the first direction X, the outer circumferential surface 1417 includes a first sub outer circumferential surface 1417a and a second sub outer circumferential surface 1417b disposed oppositely, the fusing portion 1414 is connected to the first sub outer circumferential surface 1417a, and the side wall 1432 covers at least a portion of the second sub outer circumferential surface 1417b.

The side wall 1432 covers at least a portion of the second sub outer circumferential surface 1417b, indicating that the side wall 1432 may cover a portion of the second sub outer circumferential surface 1417b, or the side wall 1432 may cover the entire second sub outer circumferential surface 1417b.

In the first direction X, the side wall 1432 covers at least the portion of the second sub outer circumferential surface 1417b, and the first insulator 142 and the side wall 1432 that cooperates with the second sub outer circumferential surface 1417b form two limiting positions, so that the structure formed by the first insulator 142 and the second insulator 143 can form a stable connection with the third connecting portion 1413 to avoid position movement of the first insulator 142 and the second insulator 143 relative to the third connecting portion 1413.

According to some embodiments of the present application, optionally, in the second direction Y, the outer circumferential surface 1417 includes a third sub outer circumferential surface 1417c and a fourth sub outer circumferential surface 1417d that are disposed oppositely, the side wall 1432 covers the third sub outer circumferential surface 1417c and the fourth sub outer circumferential surface 1417d, and the second direction Y is perpendicular to the first direction X and the thickness direction Z of the connector 141.

The side wall 1432 covers the third sub outer circumferential surface 1417c and the fourth sub outer circumferential surface 1417d, and in the second direction Y, the second insulator 143 and the third connecting portion 1413 are fixed to each other to avoid position movement of the second insulator 143 relative to the third connecting portion 1413.

According to some embodiments of the present application, optionally, an end, away from the bottom wall 1431, of the side wall 1432 does not exceed the second surface 1416.

The side wall 1432 extends from the bottom wall 1431 towards the side away from the electrode assembly 12. The end, away from the bottom wall 1431, of the side wall 1432 does not exceed the second surface 1416, indicating that the end, away from the bottom wall 1431, of the side wall 1432 is flush with the second surface 1416 or lower than the second surface 1416.

In the battery cell 10, the third insulator is further disposed on the side, facing the electrode assembly 12, of the end cover, and the third insulator corresponds to the second surface 1416. If the end, away from the bottom wall 1431, of the side wall 1432 exceeds the second surface 1416, the portion of the side wall 1432 that exceeds the second surface 1416 occupies an assembly space to affect assembly of the second connecting portion 1412 and the electrode terminal 13. Meanwhile, in order to ensure that the overall dimensions of the battery cell 10 remain unchanged, as the side wall 1432 occupies the assembly space, the capacity of active materials and the energy density of the battery cell 10 will be reduced. Alternatively, if the side wall 1432 does not occupy the assembly space and the reliability of connection between the second connecting portion 1412 and the electrode terminal 13 is to be ensured, the thickness of the third insulator is required to be reduced. The reduction in the thickness of the third insulator will affect the strength and insulating effect of the third insulator.

The end, away from the bottom wall 1431, of the side wall 1432 does not exceed the second surface 1416, which reduces space occupation of the second insulator 143 on the side, away from the electrode assembly 12, of the second surface 1416.

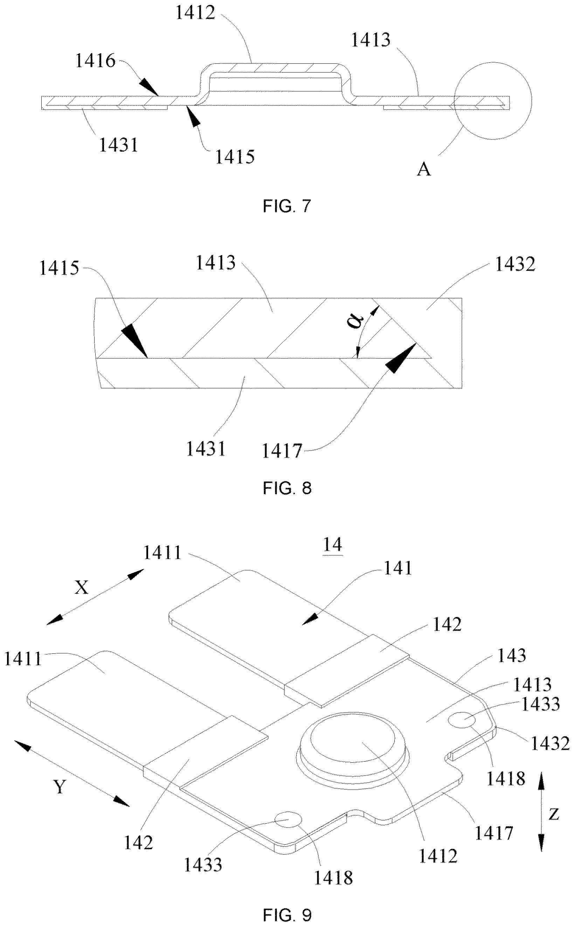

Referring to FIG. 7 and FIG. 8, FIG. 7 is a cross-sectional view of the connecting assembly 14 according to some embodiments of the present application, and FIG. 8 is a partially enlarged view at A in FIG. 7. According to some embodiments of the present application, optionally, as shown in FIG. 7 and FIG. 8, an angle a between the outer circumferential surface 1417 and the first surface 1415 is an acute angle.

In the figure, the angle indicated by the letter a is the angle between the outer circumferential surface 1417 and the first surface 1415. The angle a between the outer circumferential surface 1417 and the first surface 1415 is an acute angle, indicating that the angle formed between a plane where the outer circumferential surface 1417 is located and a plane where the first surface 1415 is located is an acute angle. For example, as shown in FIG. 7 and FIG. 8, the angle α between the outer circumferential surface 1417 and the first surface 1415 in the thickness direction of the third connecting portion 1413 and on a cross section of the third connecting portion 1413 is an acute angle.

The angle between the outer circumferential surface 1417 and the first surface 1415 is an acute angle, the side wall 1432 covers the outer circumferential surface 1417, which is equivalent to forming a bevel fit between the edge of the third connecting portion 1413 and the side wall 1432, and the second insulator 143 is buckled onto the outer circumferential surface 1417, thereby reducing the risk of falling of the second insulator 143 and improving the stability of connection between the second insulator 143 and the third connecting portion 1413.

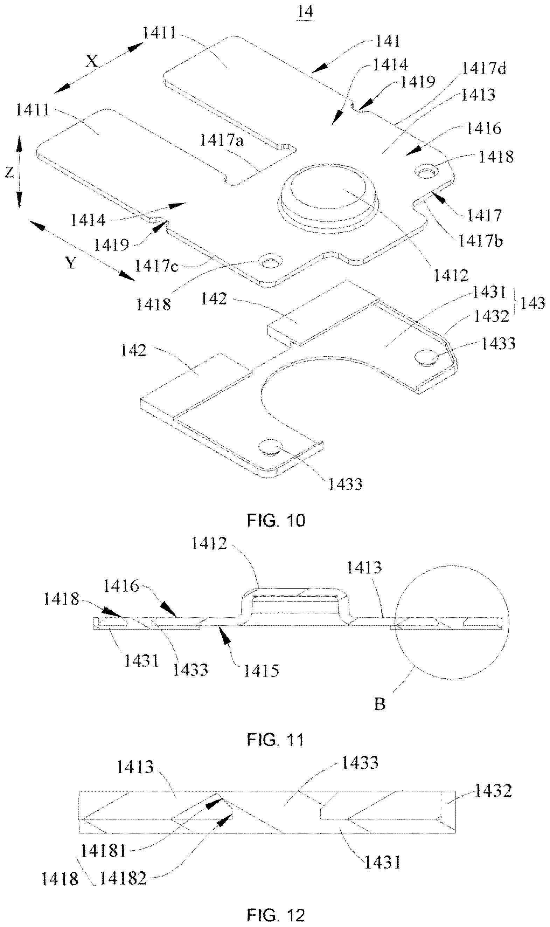

Referring to FIG. 9 to FIG. 12, FIG. 9 is a schematic structural diagram of the connecting assembly 14 according to other embodiments of the present application, FIG. 10 is a schematic diagram of an exploded structure of the connecting assembly 14 according to other embodiments of the present application, FIG. 11 is a cross-sectional view of the connecting assembly 14 according to other embodiments of the present application, and FIG. 12 is a partially enlarged view at B in FIG. 11.

According to some embodiments of the present application, optionally, as shown in FIG. 9 to FIG. 14, the third connecting portion 1413 is provided with a concave portion 1418, the second insulator 143 is provided with a second convex portion 1433, and the second convex portion 1433 is embedded with the concave portion 1418.

The concave portion 1418 refers to a recessed portion formed on the third connecting portion 1413.

The second convex portion 1433 is embedded with the concave portion 1418, indicating that the first insulator 142 and the second insulator 143 are formed with the connecting portion 141 by injection molding, that is, molten materials for forming the first insulator 142 and the second insulator 143 are overlaid on the connector 141, and then solidify to form the first insulator 142 and the second insulator 143, so that the second convex portion 1433 is embedded with the concave portion 1418.

The convex portion 1433 is embedded with the concave portion 1418 to improve the reliability of connection between the third connecting portion 1413 and the second insulator 143 and ensure that the third connecting portion 1413 is firmly connected to the second insulator 143. Even if the fusing portion 1414 is fused, the first insulator 142 and the second insulator 143 can be stably connected to the third connecting portion 1413 to ensure insulation from the first connecting portion 1411 and the tab.

According to some embodiments of the present application, optionally, as shown in FIG. 9 to FIG. 12, the concave portion 1418 is a through hole penetrating the first surface 1415 and the second surface 1416.

The through hole is a hole penetrating the first surface 1415 and the second surface 1416, that is, the through hole connects the first surface 1415 and the second surface 1416. The convex portion 1433 is formed on the bottom wall 1431 and protrudes towards the side, away from the electrode assembly 12, of the bottom wall 1431, to facilitate embedding of the convex portion 1433 with the through hole.

The concave portion 1418 is the through hole, so that the convex portion 1433 embedded with the concave portion 1418 can extend from the first surface 1415 to the second surface 1416, and the convex portion 1433 does not exceed the second surface 1416. Optionally, the convex portion 1433 is flush with the second surface 1416.

There may be a plurality of through holes which are distributed at intervals in various forms. The through hole may be in various shapes, such as circular, square, or irregular.

The concave portion 1418 is the through hole, which facilitates machining and has low manufacturing cost.

According to some embodiments of the present application, optionally, as shown in FIG. 11 and FIG. 12, the through hole includes a first hole segment 14181, and a cross-sectional area of the first hole segment 14181 gradually increases from the first surface 1415 to the second surface 1416.

The cross-sectional area of the first hole segment 14181 of the through hole refers to an area of the first hole segment 14181 cut by a surface parallel to the first surface 1415. The cross-sectional area of the first hole segment 14181 gradually increases from the first surface 1415 to the second surface 1416. Similarly, the cross-sectional area of the second convex portion 1433 that matches the first hole segment 14181 gradually increases from the first surface 1415 to the second surface 1416, and the second convex portion 1433 fills the through hole, so that the second insulator 143 is unlikely to separate from the third connecting portion 1413 in the direction from the second surface 1416 to the first surface 1415.

The cross-sectional area of the first hole segment 14181 gradually increases from the first surface 1415 to the second surface 1416, so after the second convex portion 1433 is embedded with the through hole, the strength of connection between the second insulator 143 and the third connecting portion 1413 in the thickness direction of the third connecting portion 1413 is further increased, and the stability of connection between the third connecting portion 1413 and the second insulator 143 is ensured.

Optionally, as shown in FIG. 11 and FIG. 12, the through hole further includes a second hole segment 14182, and the second hole segment 14182 is connected to an end, close to the first surface 1415, of the first hole segment 14181, that is, the second hole segment 14182 and the first hole segment 14181 are sequentially distributed from the first surface 1415 to the second surface 1416. The cross-sectional area of the second hole segment 14182 remains unchanged from the first surface 1415 to the second surface 1416, for example, the second hole segment 14182 may be an equal diameter segment.

According to some embodiments of the present application, the through hole may alternatively be a step hole, and a large diameter segment of the step hole is close to the second surface 1416 relative to a small diameter segment.

According to some embodiments of the present application, optionally, as shown in FIG. 9 and FIG. 10, there are two first connecting portions 1411, the two first connecting portions 1411 are spaced in the second direction Y, there are two through holes, the two through holes are spaced in the second direction Y, the second connecting portion 1412 protrudes from the second surface 1416, and the second connecting portion 1412 is located between the two through holes.

In the presence of two first connecting portions 1411, the third connecting portion 1413 has a large size in the second direction Y. The two through holes spaced in the second direction Y may correspond to the two first connecting portions 1411 one to one.

The second connecting portion 1412 protrudes from the second surface 1416, and the second insulator 143 is provided with an opening for avoiding the second connecting portion 1412 to facilitate the connection between the second connecting portion 1412 and the electrode terminal 13. The second connecting portion 1412 is located between the two through holes, and the second connecting portion 1412 is located between the two first connecting portions 1411, so that current exported from the two first connecting portions 1411 is transmitted to the electrode terminal 13 via the second connecting portion 1412.

The two through holes increase a connecting position between the third connecting portion 1413 and the second insulator 143 and improve the stability of connection between the third connecting portion 1413 and the second insulator 143.

In some embodiments of the present application, the second connecting portion 1412 may not protrude from the second surface 1416 of the third connecting portion 1413, for example, the second connecting portion 1412 may be flush with the second surface 1416 of the third connecting portion 1413.

According to some embodiments of the present application, optionally, as shown in FIG. 9 and FIG. 10, in the first direction X, a minimum distance between a wall portion of the through hole and the fusing portion 1414 is greater than that between the second connecting portion 1412 and the fusing portion 1414.

In the first direction X, the minimum distance between the wall portion of the through hole and the fusing portion 1414 is greater than that between the second connecting portion 1412 and the fusing portion 1414, that is, the through hole is further from the fusing portion 1414 than the second connecting portion 1412.

When the first connecting portion 1411 transmits the current to the second connecting portion 1412 through the fusing portion 1414 and the third connecting portion 1413, or when the current is transmitted from the second connecting portion 1412 to the first connecting portion 1411, the current mainly flows along a nearest path. The distance between the through hole and the fusing portion 1414 is greater than that between the second connecting portion 1412 and the fusing portion 1414, so the position of the through hole hardly affects the transmission of the current between the second connecting portion 1412 and the first connecting portion 1411, and the connecting portion 141 has a high overcurrent capacity. If the through hole is close to the fusing portion 1414, the transmission of the current between the second connecting portion 1412 and the first connecting portion 1411 is affected, resulting in a weak overcurrent capacity, excessive temperature rise, decomposition of an electrolyte, and short service life of the electrolyte. In addition, when the diameter of the through hole is large, the fusing portion may change, and the uncertain fusing portion affects the overcurrent capacity, so as to affect normal use of the battery cell 10.

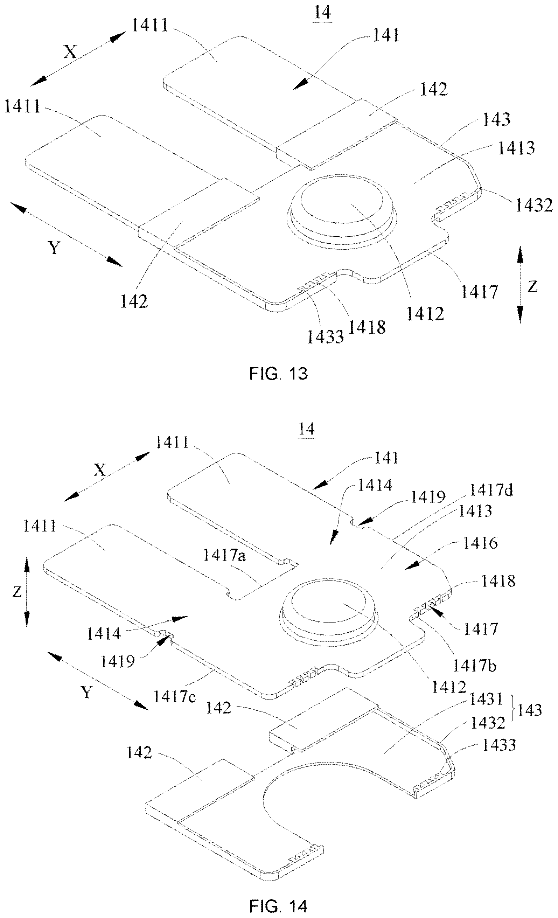

Referring to FIG. 13 and FIG. 14, FIG. 13 is a schematic structural diagram of the connecting assembly 14 according to other embodiments of the present application, and FIG. 14 is a schematic diagram of an exploded structure of the connecting assembly 14 according to other embodiments of the present application. According to some embodiments of the present application, optionally, as shown in FIG. 13 and FIG. 14, the concave portion 1418 is a groove formed on the outer circumferential surface 1417, and the second convex portion 1433 is a protrusion formed on an inner circumferential surface of the side wall 1432.

The concave portion 1418 is located on the outer circumferential surface 1417 and penetrates the third connecting portion 1413 in the thickness direction of the third connecting portion 1413.

The second convex portion 1433 is the protrusion formed on the inner circumferential surface of the side wall 1432, where the inner circumferential surface of the side wall 1432 refers to a surface, facing the third connecting portion 1413, of the side wall 1432, that is, a surface of the side wall 1432 that matches the outer circumferential surface 1417 of the third connecting portion 1413.

The groove of the outer circumferential surface 1417 is embedded with the protrusion of the side wall 1432, so that the second insulator 143 is unlikely to separate from the third connecting portion 1413, and a firm connection between the second insulator 143 and the third connecting portion 1413 is ensured.

According to some embodiments of the present application, optionally, as shown in FIG. 13 and FIG. 14, in the first direction X, the outer circumferential surface 1417 includes a first sub outer circumferential surface 1417a and a second sub outer circumferential surface 1417b disposed oppositely, the fusing portion 1414 is connected to the first sub outer circumferential surface 1417a, and the groove is formed on the second sub outer circumferential surface 1417b.

The groove and the fusing portion 1414 are disposed at two ends of the third connecting portion 1413 in the first direction X, that is, the first insulator 142 and the protrusion form two limiting positions at the two ends of the third connecting portion 1413, thereby limiting the structure formed by the first insulator 142 and the second insulator 143 to be fixed relative to the third connecting portion 1413, and reducing a probability of separation of the structure formed by the first insulator 142 and the second insulator 143 from the third connecting portion 1413.

According to some embodiments of the present application, optionally, as shown in FIG. 13 and FIG. 14, the groove includes a first groove segment, and a cross-sectional area of the first groove segment gradually increases from an opening of the groove to a bottom of the groove.

The cross-sectional area of the first groove segment refers to a cross-sectional area of the groove cut by a plane perpendicular to the opening of the groove to the bottom of the groove. Optionally, the groove may be a dovetail groove.

The second convex portion 1433 is embedded with the groove, so that the second convex portion 1433 fills the groove. When the cross-sectional area of the first groove segment gradually increases from the opening of the groove to the bottom of the groove, the structural form of the first groove segment can limit the second convex portion 1433 to separate from the groove from the bottom of the groove to the opening of the groove, thereby increasing the difficulty of separating the second insulator 143 from the third connecting portion 1413, and ensuring the stability of connection between the second insulator 143 and the third connecting portion 1413.

According to some embodiments of the present application, optionally, there may be a plurality of grooves spaced in a circumferential direction of the third connecting portion 1413.

There is a plurality of grooves spaced in the circumferential direction of the third connecting portion 1413, so that the third connecting portion 1413 has a plurality of connecting positions with the second insulator 143, thereby improving the stability of connection between the third connecting portion 1413 and the second insulator 143.

According to some embodiments of the present application, the present application provides a battery 100, including the battery cell 10 described in any of the foregoing solutions.

According to some embodiments of the present application, the present application provides a power consumption device, including the battery 100 described in any of the foregoing solutions, where the battery 100 is used for providing electrical energy to the power consumption device.

The power consumption device may be any of the foregoing devices or systems using the battery.

According to some embodiments of the present application, as shown in FIG. 4 to FIG. 14, the present application provides a connecting assembly 14. The connecting assembly 14 includes a connector 141, a first insulator 142, and a second insulator 143. The connector 141 includes a first connecting portion 1411 for connecting a tab of an electrode assembly 12, a second connecting portion 1412 for connecting an electrode terminal 13, and a third connecting portion 1413 for connecting the first connecting portion 1411 and the second connecting portion 1412. A fusing portion 1414 is formed between the first connecting portion 1411 and the third connecting portion 1413, and the third connecting portion 1413 has a first surface 1415 facing the electrode assembly 12. The first insulator 142 wraps the fusing portion 1414, the second insulator 143 covers at least a portion of the first surface 1415, and the second insulator 143 and the first insulator 142 are integrally formed. The third connecting portion 1413 is provided with a through hole, the second insulator 143 is provided with a convex portion 1433 corresponding to the through hole, and the convex portion 1433 is embedded with the through hole. The first insulator 142 and the second insulator 143 are formed with the connecting assembly 141 by injection molding.

According to the connecting assembly 14 in the embodiment of the present application, the first insulator 142 and the second insulator 143 are integrally formed, and the first insulator 142 wraps the fusing portion 1414, that is, the circumference of the fusing portion 1414 is wrapped by the first insulator 142, so the first insulator 142 and the second insulator 143 are firmly connected with the connector 141. In a battery cell 10 including the connecting assembly 14, when current flowing through the connector 141 exceeds a threshold, the fusing portion 1414 is fused, the first connecting portion 1411 and the third connecting portion 1413 are disconnected, and the first insulator 142 is fused to block the connection between the first connecting portion 1411 and the third connecting portion 1413, so that a disconnection point of the first connecting portion 1411 and a disconnection point of the third connecting portion 1413 are wrapped by the fused first insulator 142 to limit relative positions of the first connecting portion 1411 and the third connecting portion 1413 and isolate an electrolyte, and the first connecting portion 1411 and the third connecting portion 1413 are in an insulated isolation state. Meanwhile, because the first insulator 142 and the second insulator 143 are integrally formed, the convex portion 1433 is embedded with the through hole, and the first insulator 142 and the second insulator 143 are still connected to the third connecting portion 1413, thereby improving insulation reliability and improving safety of the battery cell 10.

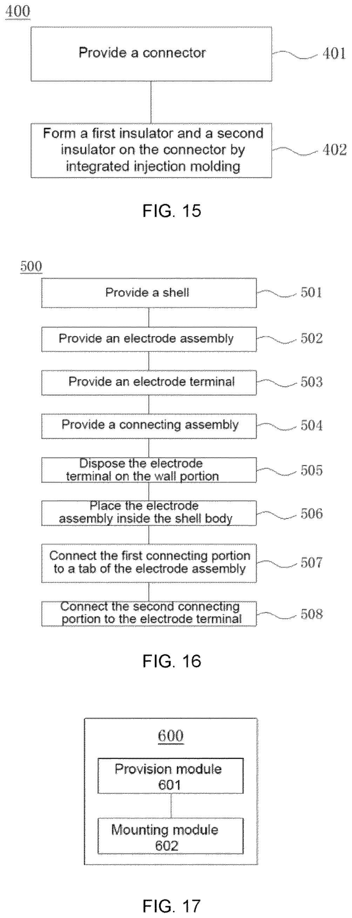

FIG. 15 shows a schematic flowchart of a connecting assembly manufacturing method 400 according to some embodiments of the present application. According to some embodiments of the present application, the present application provides a connecting assembly manufacturing method 400. As shown in FIG. 15, the connecting assembly manufacturing method 400 may include:
401: providing a connector 141, where the connector 141 includes a first connecting portion 1411 for connecting a tab of an electrode assembly 12, a second connecting portion 1412 for connecting an electrode terminal 13, and a third connecting portion 1413 for connecting the first connecting portion 1411 and the second connecting portion 1412, where a fusing portion 1414 is formed between the first connecting portion 1411 and the third connecting portion 1413, and the third connecting portion 1413 has a first surface 1415 facing the electrode assembly 12; and
402: forming a first insulator 142 and a second insulator 143 on the connector 141 by integrated injection molding, so that the first insulator 142 wraps the fusing portion 1414, and the second insulator 143 covers at least a portion of the first surface 1415.

FIG. 16 shows a schematic flowchart of a battery cell manufacturing method 500 according to some embodiments of the present application. According to some embodiments of the present application, the present application provides a battery cell manufacturing method 500. As shown in FIG. 16, the battery cell manufacturing method 500 may include:
501: providing a shell 11, including a wall portion 111;
502: providing an electrode assembly 12;
503: providing an electrode terminal 13;
504: providing a connecting assembly 14, where the connecting assembly 14 includes: a connector 141, including a first connecting portion 1411, a second connecting portion 1412, and a third connecting portion 1413 for connecting the first connecting portion 1411 and the second connecting portion 1412, where a fusing portion 1414 is formed between the first connecting portion 1411 and the third connecting portion 1413, and the third connecting portion 1413 has a first surface 1415; a first insulator 142 wrapping the fusing portion 1414; and a second insulator 143 covering at least a portion of the first surface 1415, where the second insulator 143 and the first insulator 142 are integrally formed;
505: disposing the electrode terminal 13 on the wall portion 111;
506: placing the electrode assembly 12 inside a shell body 112;
507: connecting the first connecting portion 1411 to a tab of the electrode assembly 12, so that the first surface 1415 faces the electrode assembly 12; and
508: connecting the second connecting portion 1412 to the electrode terminal 13.

FIG. 17 shows a schematic block diagram of a battery cell manufacturing device 600 according to some embodiments of the present application. According to some embodiments of the present application, the present application provides a battery cell manufacturing device 600. As shown in FIG. 17, the battery cell manufacturing device 600 may include:
a provision module 601, configured to: provide a shell 11, where the shell 11 includes a wall portion 111; provide an electrode assembly 12; provide an electrode terminal 13; and provide a connecting assembly 14, where the connecting assembly 14 includes: a connector 141, including a first connecting portion 1411, a second connecting portion 1412, and a third connecting portion 1413 for connecting the first connecting portion 1411 and the second connecting portion 1412, where a fusing portion 1414 is formed between the first connecting portion 1411 and the third connecting portion 1413, and the third connecting portion 1413 has a first surface 1415; a first insulator 142 wrapping the fusing portion 1414; and a second insulator 143 covering at least a portion of the first surface 1415, where the second insulator 143 and the first insulator 142 are integrally formed; and
a mounting module 602, configured to dispose the electrode terminal 13 on the wall portion 111; place the electrode assembly 12 inside a shell body 112; connect the first connecting portion 1411 to a tab of the electrode assembly 12, so that the first surface 1415 faces the electrode assembly 12; and connect the second connecting portion 1412 to the electrode terminal 13.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A connecting assembly for a battery cell, comprising;
a connector, comprising a first connecting portion for connecting a tab of an electrode assembly, a second connecting portion for connecting an electrode terminal, and a third connecting portion for connecting the first connecting portion and the second connecting portion, wherein a fusing portion is formed between the first connecting portion and the third connecting portion, the first connecting portion, the fusing portion and the third connecting portion are arranged in a first direction, and the third connecting portion has a first surface facing the electrode assembly;
a first insulator, wrapping the fusing portion; and
a second insulator, covering at least a portion of the first surface, wherein
the second insulator and the first insulator are integrally formed.

2. The connecting assembly according to claim 1, wherein the first insulator surrounds an outer circumference of the fusing portion.

3. The connecting assembly according to claim 1 or 2, wherein the connector has a gap, the gap is located on at least one side of the fusing portion in a second direction, an inner wall of the first insulator is provided with a first convex portion corresponding to the gap, the first convex portion is configured to fill the gap, and the second direction is perpendicular to the first direction and a thickness direction of the connector.

4. The connecting assembly according to any one of claims 1-3, wherein the third connecting portion further has a second surface away from the electrode assembly and an outer circumferential surface connecting the first surface and the second surface, the second insulator comprises a bottom wall and a side wall, the side wall protrudes from an edge of the bottom wall in a direction away from the electrode assembly, the bottom wall covers at least a portion of the first surface, and the side wall covers at least a portion of the outer circumferential surface.

5. The connecting assembly according to claim 4, wherein in the first direction, the outer circumferential surface comprises a first sub outer circumferential surface and a second sub outer circumferential surface disposed oppositely, the fusing portion is connected to the first sub outer circumferential surface, and the side wall covers at least a portion of the second sub outer circumferential surface.

6. The connecting assembly according to claim 4 or 5, wherein in the second direction, the outer circumferential surface comprises a third sub outer circumferential surface and a fourth sub outer circumferential surface disposed oppositely, the side wall covers the third sub outer circumferential surface and the fourth sub outer circumferential surface, and the second direction is perpendicular to the first direction and a thickness direction of the connector.

7. The connecting assembly according to any one of claims 4-6, wherein an end, away from the bottom wall, of the side wall does not exceed the second surface.

8. The connecting assembly according to any one of claims 4-7, wherein an angle between the outer circumferential surface and the first surface is an acute angle.

9. The connecting assembly according to any one of claims 4-8, wherein the third connecting portion is provided with a concave portion, the second insulator is provided with a second convex portion, and the second convex portion is embedded with the concave portion.

10. The connecting assembly according to claim 9, wherein the concave portion is a through hole penetrating the first surface and the second surface.

11. The connecting assembly according to claim 10, wherein the through hole comprises a first hole segment, and a cross-sectional area of the first hole segment gradually increases from the first surface to the second surface.

12. The connecting assembly according to claim 10 or 11, wherein two first connecting portions are provided, the two first connecting portions are spaced in the second direction, the second direction is perpendicular to the first direction and a thickness direction of the connector, two through holes are provided, the two through holes are spaced in the second direction, the second connecting portion protrudes from the second surface, and the second connecting portion is located between the two through holes.

13. The connecting assembly according to any one of claims 10-12, wherein in the first direction, a minimum distance between a wall portion of the through hole and the fusing portion is greater than that between the second connecting portion and the fusing portion.

14. The connecting assembly according to claim 9, wherein the concave portion is a groove formed on the outer circumferential surface, and the second convex portion is a protrusion formed on an inner circumferential surface of the side wall.

15. The connecting assembly according to claim 14, wherein in the first direction, the outer circumferential surface comprises a first sub outer circumferential surface and a second sub outer circumferential surface disposed oppositely, the fusing portion is connected to the first sub outer circumferential surface, and the groove is formed on the second sub outer circumferential surface.

16. The connecting assembly according to claim 14 or 15, wherein the groove comprises a first groove segment, and a cross-sectional area of the first groove segment gradually increases from an opening of the groove to a bottom of the groove.

17. The connecting assembly according to any one of claims 14-16, wherein a plurality of grooves are provided to be spaced in a circumferential direction of the third connecting portion.

18. A battery cell, comprising:
a shell, comprising a wall portion;
an electrode assembly, disposed inside the shell;
an electrode terminal, disposed on the wall portion; and
the connecting assembly according to any one of claims 1-17, wherein the first connecting portion is connected to a lug of the electrode assembly, and the second connecting portion is connected to the electrode terminal.

19. A battery, comprising the battery cell according to claim 18.

20. A power consumption device, comprising the battery according to claim 19.

21. A connecting assembly manufacturing method, the connecting assembly being used for a battery cell, comprising:
providing a connector, wherein the connector comprises a first connecting portion for connecting a tab of an electrode assembly, a second connecting portion for connecting an electrode terminal, and a third connecting portion for connecting the first connecting portion and the second connecting portion, a fusing portion is formed between the first connecting portion and the third connecting portion, and the third connecting portion has a first surface facing the electrode assembly; and
forming a first insulator and a second insulator on the connector by integrated injection molding, so that the first insulator wraps the fusing portion, and the second insulator covers at least a portion of the first surface.

22. A battery cell manufacturing method, comprising:
providing a shell, comprising a wall portion;
providing an electrode assembly;
providing an electrode terminal;
providing a connecting assembly, wherein the connecting assembly comprises: a connector, comprising a first connecting portion, a second connecting portion, and a third connecting portion for connecting the first connecting portion and the second connecting portion, wherein a fusing portion is formed between the first connecting portion and the third connecting portion, and the third connecting portion has a first surface; a first insulator wrapping the fusing portion; and a second insulator covering at least a portion of the first surface, wherein the second insulator and the first insulator are integrally formed;
disposing the electrode terminal on the wall portion;
placing the electrode assembly inside a shell body;
connecting the first connecting portion to a tab of the electrode assembly, so that the first surface faces the electrode assembly; and
connecting the second connecting portion to the electrode terminal.

23. A battery cell manufacturing device, comprising:
a provision module, configured to: provide a shell, wherein the shell comprises a wall portion; provide an electrode assembly; provide an electrode terminal; and provide a connecting assembly, wherein the connecting assembly comprises: a connector, comprising a first connecting portion, a second connecting portion, and a third connecting portion for connecting the first connecting portion and the second connecting portion, wherein a fusing portion is formed between the first connecting portion and the third connecting portion, and the third connecting portion has a first surface; a first insulator wrapping the fusing portion; and a second insulator covering at least a portion of the first surface, wherein the second insulator and the first insulator are integrally formed; and
a mounting module, configured to dispose the electrode terminal on the wall portion; place the electrode assembly inside a shell body; connect the first connecting portion to a tab of the electrode assembly, so that the first surface faces the electrode assembly; and connect the second connecting portion to the electrode terminal.
